# EUROPEAN PATENT APPLICATION

(11) **EP 4 345 418 A2**
(43) Date of publication of application: **03.04.2024**
(21) Application number: 23182281.8
(22) Date of filing: 29.06.2023
(51) Int. Cl.: G01C 21/20

(54) **INFORMATION PROCESSING SYSTEM AND INFORMATION PROCESSING METHOD**

(30) Priority: 09.08.2022 JP 2022126913
(71) Applicant: Hitachi, Ltd., Tokyo 100-8280 (JP)
(72) Inventor: KAWAGUCHI, Daisuke, Tokyo, 100-8280 (JP); OTAKE, Yusuke, Tokyo, 100-8280 (JP); ITO, Takahiro, Tokyo, 100-8280 (JP); SHIMIZU, Taku, Tokyo, 100-8280 (JP); BANDO, Mikio, Tokyo, 100-8280 (JP)
(74) Representative: Strehl Schübel-Hopf & Partner

(57) **Abstract**

In order to achieve the above objects, according to the present invention, an information processing system includes a wind-condition estimation unit that estimates wind-condition information in a predetermined space region, and an evaluation unit that evaluates flight difficulty or economic efficiency of an aircraft based on the estimated wind-condition information. According to the present invention, an information processing method includes estimating wind-condition information in a predetermined space region, and evaluating flight difficulty or economic efficiency of an aircraft based on the estimated wind-condition information.

## Description

### BACKGROUND OF THE INVENTION

### 1. Field of the Invention

The present invention relates to an information processing system and an information processing method for evaluating flight difficulty and economic efficiency of each space region in which a small aircraft represented by a drone or eVTOL can fly.

### 2. Description of the Related Art

In various fields such as inspection, cargo transportation, and passenger transportation, a small-sized aircraft (referred to simply as a "small aircraft" below) represented by a drone and eVTOL is expected to spread. This type of small aircraft is much lightweight compared to the conventional large aircraft and assumes low altitude flight, so that information required for stable flight is significantly different from information required for large aircraft.

Specifically, since the conventional large aircraft flies at a high altitude of 400 m or higher from the ground surface, it is not necessary to consider the influence of terrain and buildings except the time of take-off and landing, and it is only necessary to determine the flight path mainly in consideration of the wide area wind condition of the upper atmosphere. On the other hand, since a small aircraft flies at a low altitude of lower than 400 m from the ground surface, it is necessary to consider the terrain and the building themselves as obstacles. Furthermore, since the small aircraft is much lightweight and has a characteristic of being greatly influenced by the wind, it is necessary to determine a flight path that allows stably flying in consideration of the influence of local wind conditions (turbulence and the like) caused by the topography and the building.

As a conventional technique for improving such a problem, a system in JP 2019-89538 A is known. For example, Claim 1 in the same document discloses "A system for taking into account micro wind conditions in a region, comprising: a plurality of aerial vehicles within the region... ; and a wind speed calculator, the wind speed calculator configured to determine wind vectors within the region using measurements from the plurality of aerial vehicles, wherein the plurality of aerial vehicles is a plurality of unmanned aerial vehicles, a three-dimensional wind map generator configured to create a three-dimensional wind map with interpolated wind vectors within the region, wherein the interpolated wind vectors are associated with set grid points of a three-dimensional grid, wherein the flight plan generator is configured to create the flight plan using the three-dimensional wind prediction map for the region for the future time, further comprising: a communication system configured to communicate flight plans with the plurality of aerial vehicles."

Further, in the paragraph [0079] in JP 2019-89538 A, it is disclosed, "Turning now to Figure 9, an illustration of a two-dimensional view of an unmanned aerial vehicle with an original flight plan and a new flight plan taking into account micro wind conditions is depicted in accordance with an illustrative embodiment. Path 908 is an initial path. Path 908 may be determined using any desirable method. In some illustrative examples, path 908 may be the fastest path without winds. In some illustrative examples, path 908 may be the most direct path." In the paragraph [0080], it is disclosed, "Path 910 is a modified flight path... In this illustrative example, path 910 is created based on wind vectors 912 in region 902....when wind vectors 912 are determined in real-time, wind vectors 912 may be directly measured by unmanned aerial vehicles."

As described above, JP 2019-89538 A discloses a method of planning another flight path obtained by modifying the initially planned flight path (fastest path, shortest path) by considering the wind vector in the region, which is directly measured by the unmanned aerial vehicle.

### SUMMARY OF THE INVENTION

However, in the system of JP 2019-89538 A, since it is not evaluated in advance whether the modified flight path is a flight path having lower flight difficulty and higher economic efficiency than the initial flight path, there is a probability that the modified flight path is degraded as compared to the initial path in terms of flight difficulty and economic efficiency. When there are a plurality of flight path candidates, there is a probability that it is not possible to select the best flight path.

Therefore, an object of the present invention is to provide an information processing system and an information processing method for evaluating flight difficulty and economic efficiency as a flight path for each local space region in which a small aircraft can fly during flight from a departure point to a destination and generating an evaluation result in the form of three-dimensional information.

In order to achieve the above objects, according to the present invention, an information processing system includes a wind-condition estimation unit that estimates wind-condition information in a predetermined space region, and an evaluation unit that evaluates flight difficulty or economic efficiency of an aircraft based on the estimated wind-condition information.

According to the information processing system and the information processing method of the present invention, it is possible to evaluate flight difficulty and economic efficiency as a flight path for each local space region in which a small aircraft can fly during flight from a departure point to a destination and generate an evaluation result in the form of three-dimensional information. Then, based on the three-dimensional information, it is possible to easily determine a flight path that is excellent in flight difficulty and economic efficiency.

### BRIEF DESCRIPTION OF THE DRAWINGS

Fig. 1 is a functional block diagram illustrating an information processing system according to a first embodiment;
Fig. 2 is a diagram illustrating a three-dimensional grid of a local space region;
Fig. 3 is a diagram illustrating an example of a situation of low flight difficulty;
Fig. 4 is a diagram illustrating an example of a situation of high flight difficulty;
Fig. 5 is a diagram illustrating an example of a situation of high economic efficiency;
Fig. 6 is a diagram illustrating an example of a flight path planned based on three-dimensional information in the first embodiment;
Fig. 7 is a functional block diagram illustrating an information processing system according to a second embodiment; and
Fig. 8 is a diagram illustrating an example of a flight path planned based on three-dimensional information in the second embodiment.

### DESCRIPTION OF THE PREFERRED EMBODIMENTS

Hereinafter, embodiments of an information processing system of the present invention will be described in detail with reference to the drawings.

### First Embodiment

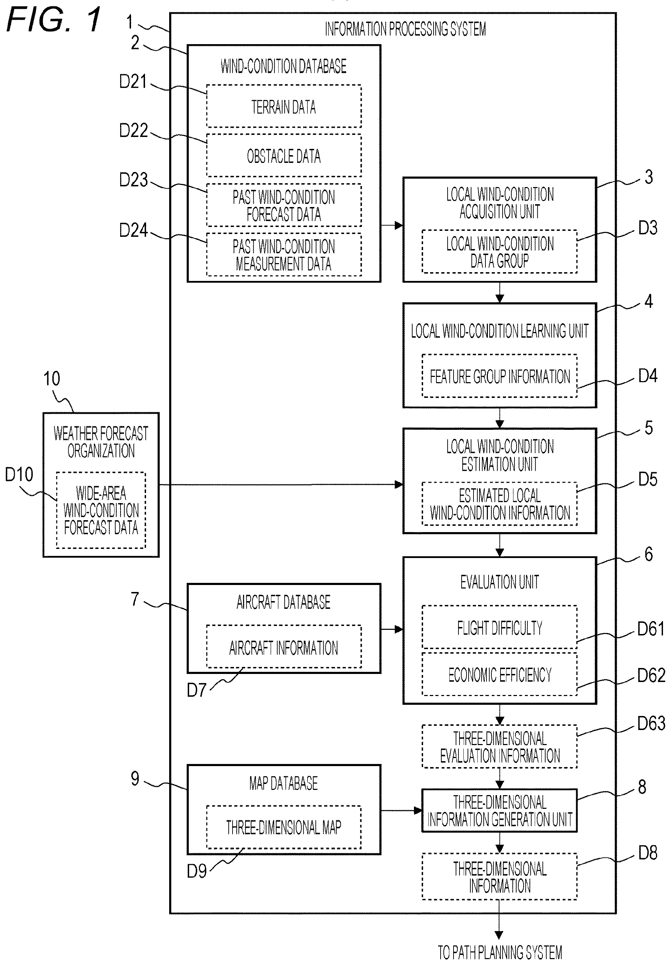

First, an information processing system 1 according to a first embodiment of the present invention will be described with reference to Figs. 1 to 6.

Fig. 1 is a functional block diagram illustrating an information processing system 1 according to the present embodiment. The information processing system 1 refers to the latest wide-area wind-condition forecast data (for example, wind-condition forecast data in a municipal unit) of a region through which a small aircraft can pass during a flight from a departure point to a destination to evaluate flight difficulty and economic efficiency for each local space region S in which a flight is assumed, and then integrates the evaluation results in a form of three-dimensional information, and provides the result of the integration to an external path planning system. As illustrated in Fig. 1, the information processing system 1 includes a wind-condition database 2, a local wind-condition acquisition unit 3, a local wind-condition learning unit 4, a local wind-condition estimation unit 5, an evaluation unit 6, an aircraft database 7, a three-dimensional information generation unit 8, and a map database 9.

Specifically, the information processing system 1 is a computer that includes an arithmetic device such as a CPU, a storage device such as a semiconductor memory, and hardware such as a communication device, or a server on a cloud. The arithmetic device executes a desired program while referring to various databases to realize each functional unit such as the local wind-condition acquisition unit 3. In the followings, such a well-known technique will be appropriately omitted, and the function of each unit for generating three-dimensional information in the information processing system 1 will be described.

The wind-condition database 2 is a database that stores terrain data D21, obstacle data D22, past wind-condition forecast data D23, and past wind-condition measurement data D24. The terrain data D21 is three-dimensional data indicating positions and shapes of various types of terrain represented by mountains and rivers. The obstacle data D22 is three-dimensional data indicating positions and shapes of various artificial objects represented by buildings and houses. The past wind-condition forecast data D23 is a data group in which wide-area wind-condition forecast data acquired in the past is accumulated. The past wind-condition measurement data D24 is a data group in which wind-condition measurement data acquired in the past is accumulated.

The local wind-condition acquisition unit 3 acquires, as necessary, the terrain data D21, the obstacle data D22, the past wind-condition forecast data D23, and the past wind-condition measurement data D24, which are related to the local space region S in which a small aircraft is assumed to fly. In addition, the local wind-condition acquisition unit 3 generates a local wind-condition data group D3 indicating the wind direction and the wind speed in a three-dimensional space, based on the acquired data.

As a method of generating the local wind-condition data group D3, a method of generating the local wind-condition data group D3 by simulating the wind condition of each local space region S based on the terrain data D21 and the obstacle data D22, which have been acquired, may be adopted. Alternatively, a method of directly using the past wind-condition forecast data D23 or the past wind-condition measurement data D24, which have been acquired, as the local wind-condition data group D3 may be adopted.

The local wind-condition learning unit 4 performs learning processing such as machine learning on the local wind-condition data group D3 to extract feature group information D4 in a three-dimensional space. The feature group information D4 is data that is substituted for the local wind-condition data group D3 because the feature group information D4 is lighter than the local wind-condition data group D3, but has characteristics of withstanding the use, which is equivalent to the local wind-condition data group D3.

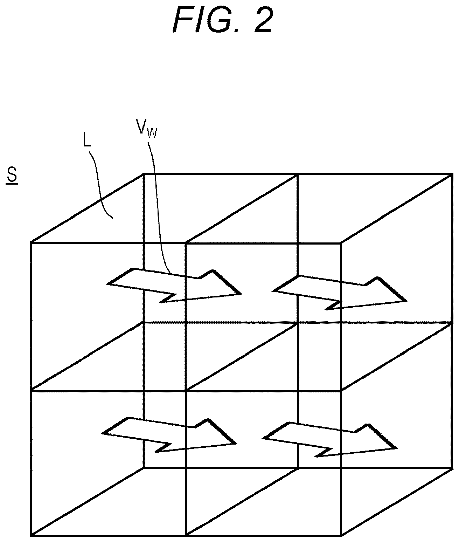

The local wind-condition estimation unit 5 estimates estimated local wind-condition information D5 by using the latest wide-area wind-condition forecast data D10 announced by the weather forecast organization 10 such as the Meteorological Agency and the feature group information D4 extracted by the local wind-condition learning unit 4. The estimated local wind-condition information D5 is a three-dimensional data group of wind-condition vectors V_{w} based on the wind speed and the wind direction. As illustrated in Fig. 2, the estimated local wind-condition information D5 is information in which wind-condition vectors V_{w} (wind-speed and wind-direction information) are stored in three-dimensional lattices L (in Fig. 2, four lattices are shown as representatives) obtained by dividing each local space region S where the small aircraft is assumed to fly, at any interval designated by a user. Although the three-dimensional grid lattice is a cube in Fig. 2, other polyhedron shapes may be used.

The evaluation unit 6 evaluates flight difficulty D61 and economic efficiency D62 as a flight path in each local space region S based on the estimated local wind-condition information D5 (more specifically, the wind-condition vector V_{w} in the three-dimensional lattice L illustrated in Fig. 2) and aircraft information D7 acquired from the aircraft database 7. The aircraft information D7 is reported by a flight plan or the like and registered in the aircraft database 7.

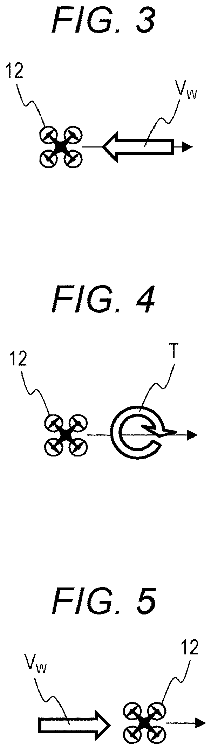

For example, in the case of evaluating the flight difficulty D61 of a certain local space region S, evaluation is performed based on the wind-condition vector V_{w} of the three-dimensional lattice L in an airspace in which a flight is scheduled, with the aircraft information D7 as a threshold value. Specifically, as illustrated in Fig. 3, in the case of a wind in which a wind-condition vector V_{w} of the three-dimensional lattice L is directed to the traveling direction of a small aircraft 12, it is determined whether the wind-condition vector V_{w} falls below an allowable value with respect to wind-resistance performance, with reference to the wind-resistance performance included in the aircraft information D7. When the wind-condition vector V_{w} falls below the allowable value, it is determined that the flight difficulty D61 in the local space region S is low.

As illustrated in Fig. 4, when it is determined that the turbulence T such as a vortex has occurred, with reference to a plurality of wind-condition vectors V_{w} of the three-dimensional lattices L in a certain local space region S, it is determined that the flight difficulty D61 in the local space region S is very high, and the local space region S is set as a flight prohibition area.

Even in the case of evaluating the economic efficiency D62, evaluation is performed based on the wind-condition vector V_{w} of the three-dimensional lattice L in an airspace in which a flight is scheduled, with the appropriate aircraft performance included in the aircraft information D7 as a threshold value. Specifically, as illustrated in Fig. 5, in the case of a wind having a wind-condition vector V_{w} that follows the traveling direction of the small aircraft 12, it is determined that the economic efficiency D62 of the local space region S is high.

By mapping the above determination result (flight difficulty D61, economic efficiency D62) to each three-dimensional lattice L, three-dimensional evaluation information D63 indicating the evaluation result of each local space region S in which the small aircraft 12 is assumed to fly is generated.

The three-dimensional information generation unit 8 generates three-dimensional information D8 to be provided to a flight path planning system (not illustrated) by mapping the three-dimensional evaluation information D63 generated by the evaluation unit 6 on a three-dimensional map D9 acquired from the map database 9.

Here, a difference between the three-dimensional map D9 in the map database 9, and the terrain data D21 and the obstacle data D22 in the wind-condition database 2 will be described. Since both types of data in the wind-condition database 2 are data used for wind-condition simulation in the local wind-condition acquisition unit 3, only the position data and the shape data necessary for the wind-condition simulation are recorded. On the other hand, the three-dimensional map D9 includes attribute data of each region in addition to the position data and the shape data corresponding to the terrain data D21 and the obstacle data D22. Examples of the attribute data include an attribute indicating a flight recommendation region (corresponding to a sky region of a river area or the like) and an attribute indicating a flight prohibition area (corresponding to a sky region of an airport, a fire department, a hospital, a school, and the like).

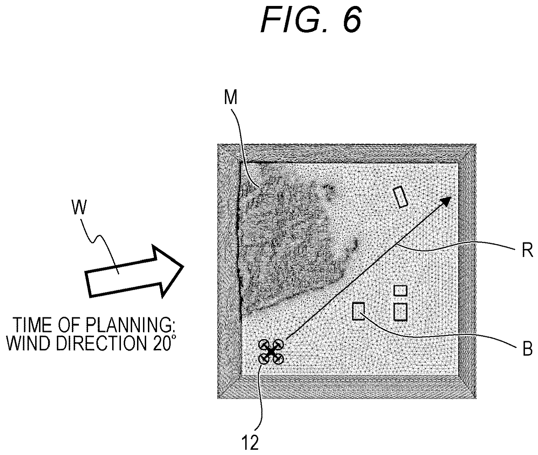

Therefore, in the flight path planning system that has received the three-dimensional information D8 from the three-dimensional information generation unit 8, it is possible to optimize the plan of the flight path of the small aircraft in consideration of not only the flight difficulty and economic efficiency as the flight path of each local space region S but also the various attributes described above. As a result, in the flight path planning system, a flight path R that avoids the mountainous area M or the building B, which is considered to enable a stable flight if estimation is performed based on the latest wide-area wind-condition forecast data D10, as illustrated in Fig. 6, is finally determined.

As described above, according to the information processing system of the present invention, for each local space region of a flight path in which a small aircraft can fly during flight from a departure point to a destination, it is possible to evaluate flight difficulty and economic efficiency as the flight path and generate the evaluation result as three-dimensional information. Then, based on the three-dimensional information, it is possible to easily finalize a flight path that is excellent in flight difficulty and economic efficiency.

### Second Embodiment

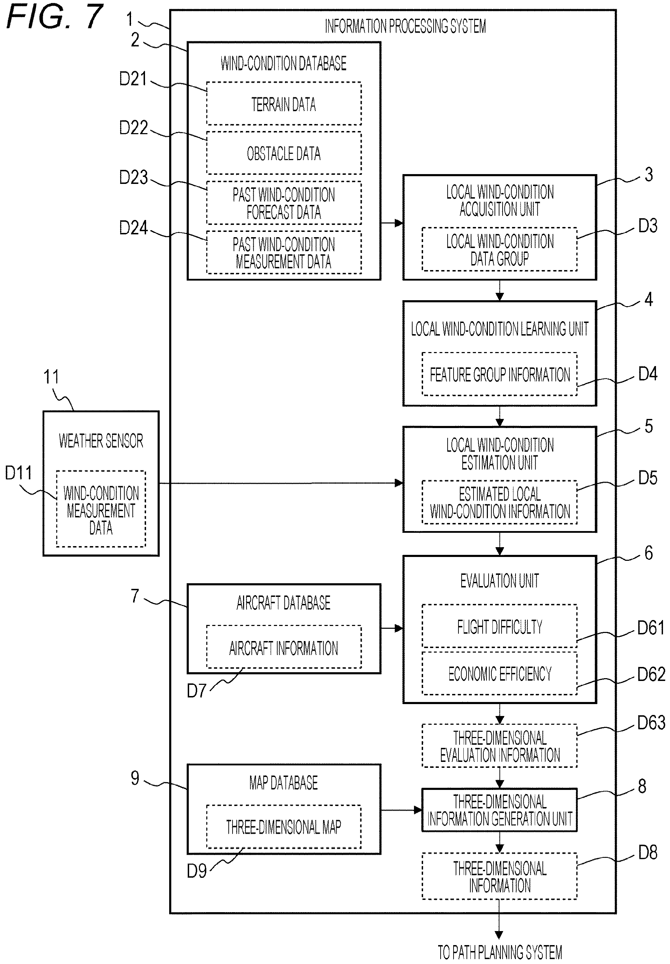

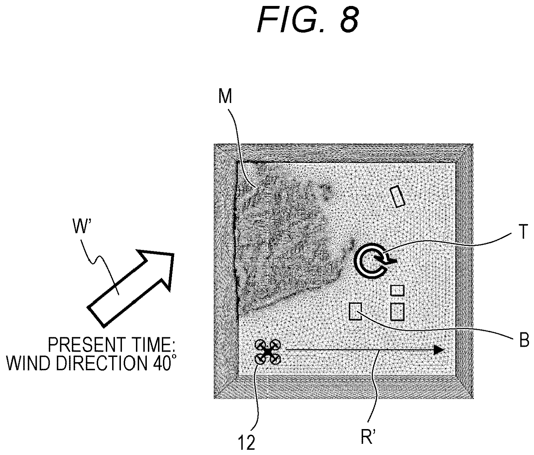

Next, an information processing system 1 according to a second embodiment of the present invention will be described with reference to Figs. 7 and 8. Repetitive descriptions of points common to the first embodiment will be omitted.

In the first embodiment, before take-off of the small aircraft 12, the estimated local wind-condition information D5 is estimated based on the latest wide-area wind-condition forecast data D10 announced by the weather forecast organization 10, and the flight path R is planned by using the estimated local wind-condition information D5. Therefore, when the departure point and the destination of the small aircraft 12 are spaced apart from each other, there is a probability that the flight path R planned before take-off is inappropriate for weather changes in various places. In addition, since the announcement interval of the wide-area wind-condition forecast data D10 by the weather forecast organization 10 is relatively long, when the estimated local wind-condition information D5 is estimated based on the latest wide-area wind-condition forecast data D10 for which a considerable time has elapsed from the announcement time, there is a probability that it is not possible to estimate a sudden weather change (socalled torrential rain and the like) that cannot be known from the old wide-area wind-condition forecast data D10, and it is not possible to plan an appropriate flight path R. The information processing system 1 in the present embodiment is made for improving these problems, and is configured as follows.

Fig. 7 is a functional block diagram illustrating an information processing system 1 according to the present embodiment. As illustrated in Fig. 7, the information processing system 1 in the present embodiment estimates the estimated local wind-condition information D5 by using wind-condition measurement data D11 measured by a weather sensor 11, instead of the wide-area wind-condition forecast data D10 in the first embodiment. The weather sensor 11 is installed in each region through which the small aircraft 12 arrives at the destination from the departure point. Thus, the information processing system 1 in the present embodiment can generate three-dimensional information D8 corresponding to the sudden weather change in each region. In addition, a path planning system that has received the three-dimensional information D8 in the present embodiment can plan the optimum flight path R' in consideration of the sudden weather change in each region.

Also in the present embodiment, in the information processing system 1, the local wind-condition acquisition unit 3 first acquires the local wind-condition data group D3, and then the local wind-condition learning unit 4 extracts the feature group information D4. If there are the local wind-condition data group D3 and the feature group information D4, which have been generated in advance, the above processing can be omitted by utilizing the local wind-condition data group D3 and the feature group information D4.

Subsequently, in the information processing system 1, the local wind-condition estimation unit 5 estimates the estimated local wind-condition information D5 by using the current wind-condition measurement data D11 measured by the weather sensor 11 installed in the local space region S in which the small aircraft 12 is assumed to fly, and the feature group information D4 described above. It is assumed that the wind-condition measurement data D11, which is the output of the weather sensor 11, includes the same type of information as the wide-area wind-condition forecast data D10 announced by the weather forecast organization 10.

When processing similar to that in the first embodiment is performed on the estimated local wind-condition information D5 in the present embodiment, which has been estimated in this manner, the current wind-condition measurement data D11 measured by the weather sensor 11 in each region is reflected in the three-dimensional information D8 in the present embodiment. Thus, the flight path R' planned by the path planning system based on the three-dimensional information D8 in the present embodiment is a path optimized in consideration of not only the economic efficiency D62, the flight difficulty D61, and obstacles such as terrain and buildings (also considered in the flight path R in the first embodiment), but also the current wind-condition measurement data D11 in the current place.

For example, a case is considered in which a wide-area wind condition W indicated by the latest wide-area wind-condition forecast data D10 at the time of planning a flight path of a certain small aircraft 12 is the wind direction forecast facing 20° north with respect to the east direction as illustrated in Fig. 6, and the optimum path on this assumption is the flight path R passing between the mountainous area M and the building B, but the current wide-area wind condition W' is the wind direction facing 40° north with respect to the east direction as illustrated in Fig. 8, and the turbulence T has occurred between the mountainous area M and the building B.

In this case, if the three-dimensional information D8 in the first embodiment is used, the flight path R in Fig. 6, which is excellent in flight difficulty and economic efficiency under the environment indicated by the wide-area wind-condition forecast data D10 is planned as the optimal path. Therefore, the small aircraft 12 passes through an inappropriate path of passing through the turbulence T that has occurred suddenly. However, if the three-dimensional information D8 in the present embodiment is used, the flight path R' in Fig. 8 avoiding the turbulence T can be determined to be optimal. Therefore, the small aircraft 12 can safely continue flight.

The present invention is not limited to the above embodiments, and various modification examples may be provided. For example, the above embodiments are described in detail in order to explain the present invention in an easy-to-understand manner, and the above embodiments are not necessarily limited to a case including all the described configurations. Further, some components in one embodiment can be replaced with the components in another embodiment, and the configuration of another embodiment can be added to the configuration of one embodiment. Regarding some components in the embodiments, other components can be added, deleted, and replaced.

## Claims

1. An information processing system comprising:
a wind-condition estimation unit that estimates wind-condition information in a predetermined space region; and
an evaluation unit that evaluates flight difficulty or economic efficiency of an aircraft based on the estimated wind-condition information.

2. The information processing system according to claim 1, wherein the evaluation unit
acquires aircraft performance of the aircraft as a threshold value, and
evaluates the flight difficulty or the economic efficiency based on a comparison between the aircraft performance, and a wind speed and a wind direction obtained from the estimated wind-condition information.

3. The information processing system according to claim 1 or 2, wherein the evaluation unit generates the flight difficulty or the economic efficiency of each space region as three-dimensional evaluation information.

4. The information processing system according to claim 3, further comprising a three-dimensional information generation unit that generates three-dimensional information by adding the three-dimensional evaluation information to a three-dimensional map space including position data, shape data, and attribute data.

5. The information processing system according to claim 4, wherein the three-dimensional information generation unit transmits the three-dimensional information to a path planning system that performs optimization calculation of a flight path of the aircraft.

6. The information processing system according to claim 1 or 2, further comprising:
a wind-condition acquisition unit that generates a wind-condition data group of each space region based on past wind-condition data, terrain data, and obstacle data; and
a wind-condition learning unit that learns feature group information based on the wind-condition data group, wherein
the wind-condition estimation unit estimates the wind-condition information based on latest wind-condition forecast data acquired from a weather forecast organization and the feature group information.

7. The information processing system according to claim 1 or 2, further comprising:
a wind-condition acquisition unit that generates a wind-condition data group of each space region based on past wind-condition data, terrain data, and obstacle data; and
a wind-condition learning unit that learns feature group information based on the wind-condition data group, wherein
the wind-condition estimation unit estimates the wind-condition information based on current wind-condition measurement data acquired from a weather sensor and the feature group information.

8. An information processing method comprising:
estimating wind-condition information in a predetermined space region; and
evaluating flight difficulty or economic efficiency of an aircraft based on the estimated wind-condition information.
